Europäisches Patentamt

European Patent Office

Office européen des brevets

(11) Veröffentlichungsnummer: **0 316 259**
**A2**

## (12) EUROPÄISCHE PATENTANMELDUNG

(21) Anmeldenummer: **88730192.7**

(22) Anmeldetag: **24.08.88**

(51) Int. Cl.⁴: **H 04 Q 1/14**

(30) Priorität: **07.11.87 DE 3738322**

(43) Veröffentlichungstag der Anmeldung:
**17.05.89 Patentblatt 89/20**

(84) Benannte Vertragsstaaten:
**AT BE CH DE ES FR GB GR IT LI LU NL SE**

(71) Anmelder: **KRONE Aktiengesellschaft**
**Beeskowdamm 3-11**
**D-1000 Berlin 37 (DE)**

(72) Erfinder: **Hegner, Gunter**
**Moränenweg 22**
**D-1000 Berlin 27 (DE)**

**Delakowitz, Bernd**
**Rebenweg 2**
**D-1000 Berlin 20 (DE)**

(54) **Anschlussleiste aus mehreren Teilleisten.**

(57) Die Erfindung bezieht sich auf eine Anschlußleiste aus mehreren Teilleisten, mit an mindestens zwei Seitenflächen angeordneten Verbindungselementen und mit Anschlußkontakten für Kabeladern, insbesondere für Kabeladern der Fernmeldetechnik.

Um eine Anschlußleiste zu schaffen, mit der Erweiterungs- und Verkleinerungsmöglichkeiten in allen drei Raumachsen bestehen, sind Verbindungselemente (10 bis 13) als Rastelemente (12) und/oder Führungselemente (13) zur Verbindung mehrerer Teilleisten miteinander ausgebildet. Im Gehäuse der Teilleisten (1) sind darüber hinaus Öffnungen (16) für mit dem Anschlußkontakt (9) elektrisch verbundene Verbindungskontakte (15) und Klemmkontakte (64) vorgesehen, welche die Anschlußkontakte (9) der verbundenen Teilleisten (1) untereinander elektrisch verbinden.

EP 0 316 259 A2

Bundesdruckerei Berlin

Beschreibung

## Anschlußleiste aus mehreren Teilleisten

Die Erfindung bezieht sich auf eine Anschlußleiste aus mehreren Teilleisten gemäß dem Oberbegriff des Anspruches 1.

Eine Anschlußleiste der gattungsgemäßen Art ist aus der DE-PS 32 01 894 vorbekannt. Diese Anschlußleiste besteht aus drei Teilleisten und aus mehreren Schalteinschüben, die jeweils zwei Kabeladern (eine Doppelader) zugeordnet sind, um somit für jeweils zqwi Kabeladern individuelle Funktionen vorzusehen. Zwei Teilleisten sind mit Schneid-Klemmkontakten bestückt, wobei 20 Kabeladern (10 Doppeladern) an einer Teilleiste anschließbar sind. Die dritte Teilleiste dient zum Anschluß von Signal- und Erdleitungen. Alle drei Teilleisten werden übereinander auf mit Zungen versehenen wannenförmigen Aufnahmevorrichtungen aufgerastet. Nachteilig bei dieser Anordnung ist, daß bei diesem System die kleinste Funktionsgruppe 10 Doppelader-Anschlüsse mit 10 Einschüben aufweist. Eine Verkleinerung bzw. Vergrößerung der Anzahl von anzuschließenden Fernmeldekabeln ist somit nur in Zehnerschritten möglich.

Der Erfindung liegt von daher die Aufgabe zugrunde, eine Anschlußleiste der gattungsgemäßen Art zu schaffen, bei der Erweiterungs- und Verkleinerungsmöglichkeiten in allen drei Raumachsen bestehen. Die Lösung dieser Aufgabe ergibt sich aus den kennzeichnenden Merkmalen des Anspruches 1. Erfindungsgemäß weist die mindestens einen Anschlußkontakt aufnehmende Teilleiste an mindestens zwei gegenüberliegenden Seitenflächen Verbindungselemente auf zur Verbindung mehrerer Teilleisten und zur Bildung einer Anschlußleiste. Im Gehäuse der Teilleiste sind ferner Öffnungen für am Anschlußkontakt angeformte Verbindungskontakte zur Verbindung weiterer Anschlußkontakte vorgesehen. Hieraus ergibt sich, daß je nach Anwendungsfall verschiedene Größen von Anschlußleisten aufgebaut werden können. Eine Vergrößerung bzw. Verkleinerung der Anschlußleiste kann in allen drei Raumachsen erfolgen. Somit ist eine Schichtbauweise, Blockbauweise oder Leistenbauweise möglich. Die einzelnen Teilleisten können individuell beschaltet sein, so daß jede Teilleiste eine unterschiedliche Funktion erhält, wobei die Gehäuse der Teilleisten immer gleich ausgebildet sind.

Weitere vorteilhafte Ausgestaltungen der Erfindung ergeben sich aus den Unteransprüchen. So kann eine Funktionseinheit aus Teilleisten und einem dazwischen einsteckbaren Verbinderelement zusammen gestellt werden, die gemeinsam mit einem Basiselement auf einer Tragschiene befestigbar sind. Es können auch mehrere Funktionseinheiten unterschiedlicher Funktionen hintereinander auf der Tragschiene in beliebiger Anzahl montiert werden. Bei Bedarf können einzelne Funktionseinheiten ausgetauscht werden.

Die Erfindung ist nachfolgend anhand mehrerer in den Zeichnungen dargestellter Ausführungsbeispiele von Anschlußleisten näher erläutert. Es zeigen:

Fig. 1 eine Perspektivansicht des ersten Ausführungsbeispieles einer Anschlußleiste,

Fig. 2 eine Perspektivansicht einer Teilleiste der Anschlußleiste,

Fig. 2a eine Perspektivansicht des vergrößert dargestellten Anschlußkontaktes der Teilleiste,

Fig. 3 eine Perspektivansicht auf zwei an der Vorder- und Rückseite miteinander verrastete Teilleisten,

Fig. 4 die Einzelheit Z gemäß Fig. 3 in vergrößerter Darstellung,

Fig. 5 eine Perspektivansicht auf zwei an der Unter- und Oberseite miteinander verrastete Teilleisten,

Fig. 6 eine Perspektivansicht auf zwei an den Seitenflächen miteinander verastete Teilleisten,

Fig. 7 eine Perspektivdarstellung des zweiten Ausführungsbeispieles einer Anschlußleiste,

Fig. 8 eine Perspektivdarstellung des dritten Ausführungsbeispieles der Anschlußleiste,

Fig. 9 bis 9i und Fig. 10 bis 10g Prinzipdarstellungen verschiedener Beschaltungsmöglichkeiten der Teilleisten,

Fig. 11 eine Perspektivansicht eines Verbinderelementes,

Fig. 12 eine Perspektivansicht auf zwei an den Seitenflächen miteinander verrastete Verbinderelemente,

Fig. 13 eine Perspektivansicht auf zwei an der Vorder- und Rückseite miteinander verrastete Verbinderelemente,

Fig. 14 bis 14a Prinzipdarstellungen verschiedener Beschaltungsmöglichkeiten der Verbinderelemente,

Fig. 15, 15b und 15d Perspektivdarstellungen von mit Signaleinrichtungen versehenen Verbinderelemente.

Fig. 15a, 15c und 15e Prinzipdarstellungen der Signalisierungseinrichtungen der Verbinderelemente,

Fig. 16 eine Perspektivansicht eines Basiselementes und einer Tragschiene,

Fig. 17 die Perspektivdarstellung eines Drahtführungselementes,

Fig. 18 eine schematische Darstellung der Signal- und Erdleitungen,

Fig. 19 eine Perspektivansicht von mehreren auf Tragschienen befestigten Anschlußleisten und

Fig. 20 eine weiteres Ausführungsbeispiel des Basiselementes.

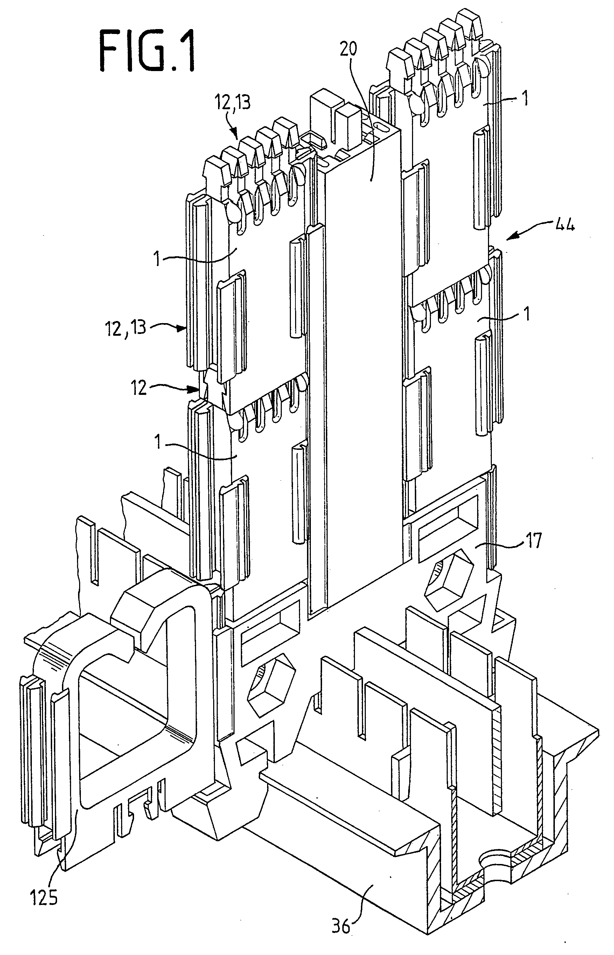

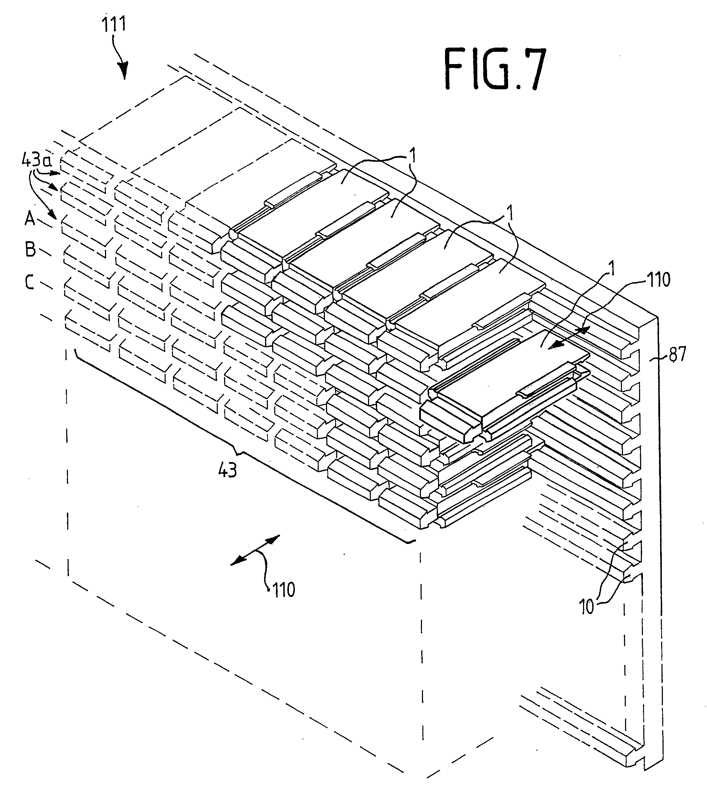

Das Grundelement einer Anschlußleiste 43 wird durch eine Teilleiste 1 gebildet. Mit mehreren Teilleisten 1 können Funktionseinheiten 44 gemäß Fig. 1 oder Leistenelemente 43a gemäß Fig. 7 aufgebaut werden. Die Funktionseinheit 44 besteht aus zwei Teilleisten 1, aus einem zwischen diesen Teilleisten 1 angeordneten Verbinderelement 20 und aus einem Basiselement 17, das mit einer Tragschiene 36 verrastet ist. Am Basiselement 17 ist seitlich ein Drahtführungselement 125 befestigt.

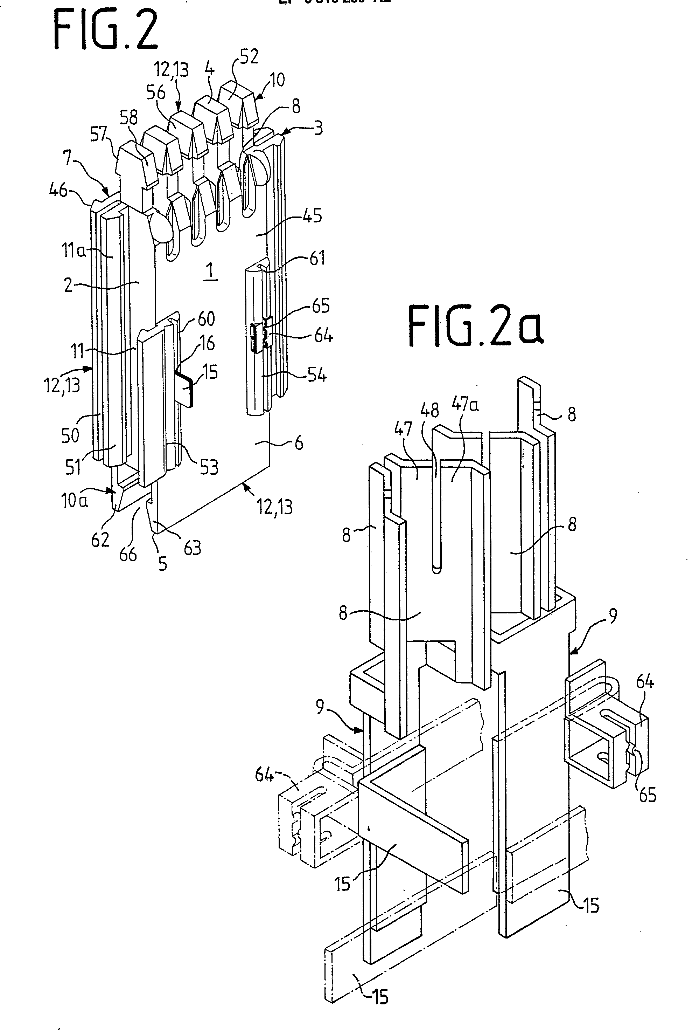

Anhand der Figuren 2, 11 und 16 werden nun die Teilleiste 1, das Verbinderelement 20 und das Basiselement 17 einer Funktionseinheit 44 näher beschrieben. Die in Fig. 2 dargestellte Teilleiste 1 besteht aus einem zweigeteilten Kunststoffgehäuse aus identisch ausgebildetem Front- und Rückteil 45, 46, die durch Ültraschallschweißen miteinander verbunden sind. Zwischen Front- und Rückteil 45, 46 sind die in Fig. 2 a dargestellten Anschlußkontakte 9 eingelegt, die in diesem Ausführungsbeispiel jeweils aus zwei Schneid-Klemmkontakten 8 gebildet sind. Der Schneid-Klemmkontakt 8 besteht aus einem metallischen Kontaktblech mit zwei Schenkeln 47, 47a, zwischen denen ein Klemmschlitz 48 gebildet ist. In den Klemmschlitz 48 wird eine anzuschliessende Kabelader 122, 123 bei gleichzeitiger Einschneidung der Kabelisolierung 49 zur Herstellung einer Kontaktverbindung eingedrückt.

Die Schenkel 47, 47a des Schneid-Klemmkontaktes 8 sind hierbei zur Kabeladerachse um ca. 45° versetzt angeordnet. Anstelle der in Fig. 2a dargestellten Schneid-Klemmkontakte 8 können aber auch zylinderförmige Schneid-Klemmkontakte, sogenannte Röhrchenkontakte, oder anders gestaltete Schneid-Klemmkontakte in die Teilleiste 1 eingesetzt werden. Am unteren Ende des Schneid-Klemmkontaktes 8 schließen sich als Verlängerung Verbindungskontakte 15 an, denen Klemmkontakte 64 angeformt sind. In der in Fig. 2a dargestellten Ausführungsform sind ein zur Vorderseite 6 gerichteter Klemmkontakt 64 und ein Verbindungekontakt 15 und zwei zur Unterseite 5 gerichtete Verbindungskontakte 15 vorgesehen, die aus der Teilleiste 1 zur elektrischen Verbindung mit anderen Teilleisten 1 herausragen. Unabhängig von den noch später beschriebenen Beschaltfunktionen können auch zu den anderen Seitenflächen 2, 3, 4, 7 Verbindungskontakte 15 und Klemmkontakte 64 vorgesehen sein.

Die Teilleiste 1 besitzt an mindestens zwei Seitenflächen 2, 3; 4, 5 Verbindungselemente 10 bis 13 zur Verbindung mehrerer Teilleisten 1 miteinander. Diese Verbindungselemente 10 bis 13 sind als Rastelemente 12 oder als Führungselemente 13 ausgebildet und bestehen an den Seitenflächen 2, 3 aus Führungsnuten 11 und Führungsstegen 11a, an der Oberseite 4 aus Rastelementen 10 und an der Unterseite 5 aus Rastaufnahmen 10a. Die Führungsstege 11a bestehen aus zwei nach außen gerichteten federnden Rasthaken 50, 51. Die Führungsstege 11a und Führungsnuten 11 sind auf beiden Seiten der Teilleiste 1 angeordnet, jedoch spiegelbildlich zueinander, so daß zwei Teilleisten 1 seitlich miteinander verrastet werden können. An einen Rasthaken 51 schließt sich seitlich die Führungsnut 11 an, deren Innenkontur der Außenkontur des Führungssteges 11a angepaßt ist. Das an der Oberseite 4 vorgesehene Rastelement 10 besteht aus fünf separaten Rastsegmenten 52, zwischen denen vier Aufnahmenuten 56 für die Schneid-Klemmkontakte 8 vorgesehen sind. Jedes Rastsegment 52 weist zwei Rasthaken 57, 58 auf, die zur Vorderund Rückseite 6, 7 gerichtet und im Querschnitt T-förmig ausgebildet sind. Die an der Unterseite 5 vorgesehene Rastaufnahme 10a besteht aus zwei nach innen gerichteten Rasthaken 62, 63. Zwischen diesen Rasthaken 62, 63 wird eine T-förmige Nut 66 gebildet, die sich über die gesamt Länge der Unterseite 5 erstreckt und deren Breite mit den Außenabmessungen der Rastsegmente 52 des Rastelementes 10 übereinstimmt. An der Vorder- und Rückseite 6,7 der Teilleiste 1 sind jeweils zwei Führungselemente 53, 54 mit Schlitzen 60, 61 vorgesehen. Aus dem Schlitz 60 eines Führungselementes 53 ragt der Verbindungskontakt 15 heraus, wofür im Gehäuse der Teilleiste 1 eine Öffnung 16 vorgesehen ist. Am anderen Führungselement 54 ist im mittleren Bereich der Klemmkontakt 64 mit drei Klemmnasen 65 vorgesehen, der - wie es später noch näher beschrieben wird - zur Aufnahme eines Verbindungskontaktes 15 einer zweiten Teilleiste 1 dient. Derartige Öffnungen 16 sind des weiteren an der Vorderseite 6, an der Rückseite 7, an den Seitenflächen 2, 3 und an der Unterseite 5 vorgesehen (nicht dargestellt).

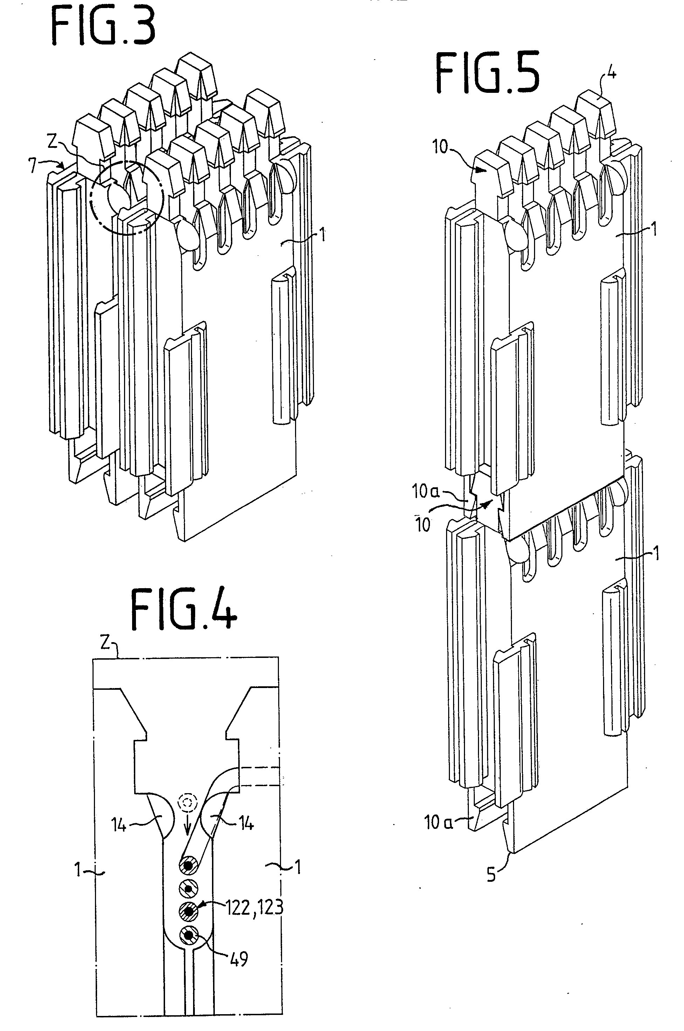

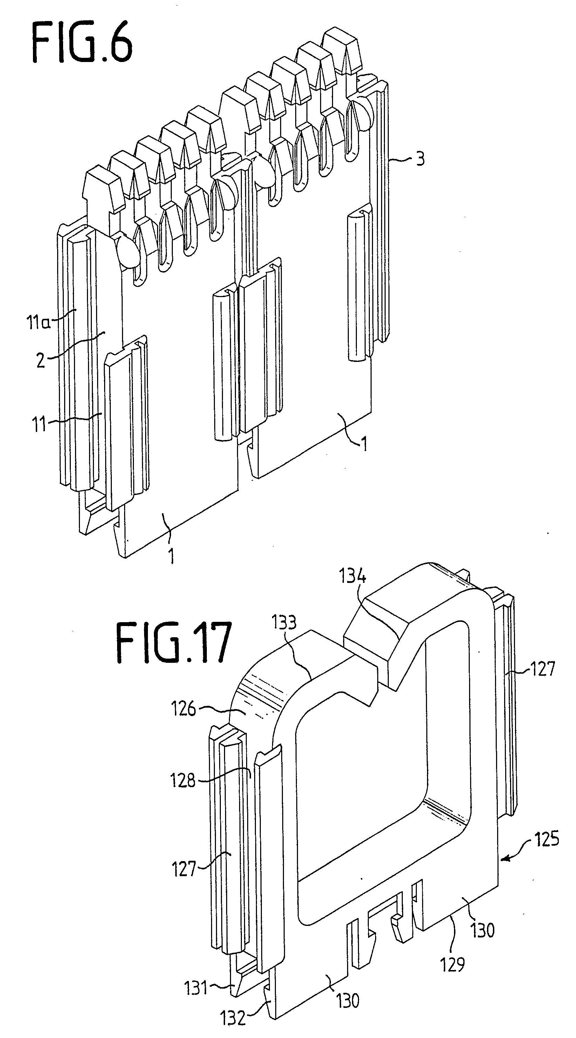

Zwei Teilleisten 1 können hintereinander an den Vorder- und Rückseiten 6, 7 (Fig. 3) oder übereinander an den Ober- und Unterseiten 4, 5 (Fig. 5) oder nebeneinander an den Seitenflächen 2, 3 miteinander verrastet werden. Werden zwei Teilleisten 1 übereinander verrastet, so greift das an der Oberseite 4 befindliche Rastelement 10 der einen Teilleiste 1 in die an der Unterseite 5 der anderen Teilleiste 1 befindliche Rastaufnahme 10a ein. Auf diese Weise können Teilleisten 1 in beliebiger Anzahl übereinander verrastet werden. Werden die Teilleisten 1 nebeneinander verrastet, so greift der an der Seitenfläche 2, 3 der ersten Teilleiste 1 befindliche Führungssteg 11a in die an der Seitenfläche 2, 3 der zweiten Teilleiste 1 befindlichen Führungsnut 11 ein (Fig. 6). Werden Teilleisten 1 hintereinander miteinander verrastet (Fig. 3), so sind an der Vorderund Rückseite 6, 7 nicht näher dargestellte Führungsstege und Führungsnuten vorgesehen, die identisch mit den an den Seitenflächen 2, 3 dargestellten Führungselementen 12, 13 ausgebildet sind. An der Vorder- und Rückseite 6, 7 sind im oberen Bereich zwei bogenförmige Haltenoppen 14 vorgesehen (Fig. 3), welche die zwischen zwei Teilleisten 1 eingelegten Kabeladern 122, 123 festhalten, so daß ein Herrausrutschen der Kabeladern 122, 123 nach oben verhindert wird. Bei allen drei Verbindungsmöglichkeiten sind für die mechanische Verbindung Verbindungselemente 10 bis 13 und für die elektrische Verbindung Verbindungskontakte 15 und Klemmkontakte 64 notwendig.

Durch die Verrastung mehrerer Teilleisten 1 können Anschlußleisten 43 gebildet werden. In einer ersten Ausführungsform werden Teilleisten 1 in beliebiger Anzahl an den Seitenflächen 2,3 miteinander verrastet (Fig. 6), so daß ein Leistenelement 43a entsteht (Fig. 7). Diese Leistenelemente 43a können jeweils verschiedene Funktionen A, B, C aufweisen, die sich aus den internen Beschaltungen der einzelnen Teilleisten 1 ergeben, wie es später noch näher erläutert werden wird. Die Leistenelemente 43a sind auf einer mit Rastelementen 10 versehenen Tragplatte 87 nebeneinander aufgerastet, so daß sich Geräteeinheiten 111 ergeben. Jedes Leistenelement 43a läßt sich nachträglich aus der Geräteeinheit 111 entfernen und durch ein anderes Leistenelement 43a einer anderen Funktion ersetzen, wie es die Pfeile 110 in Fig. 7 andeuten.

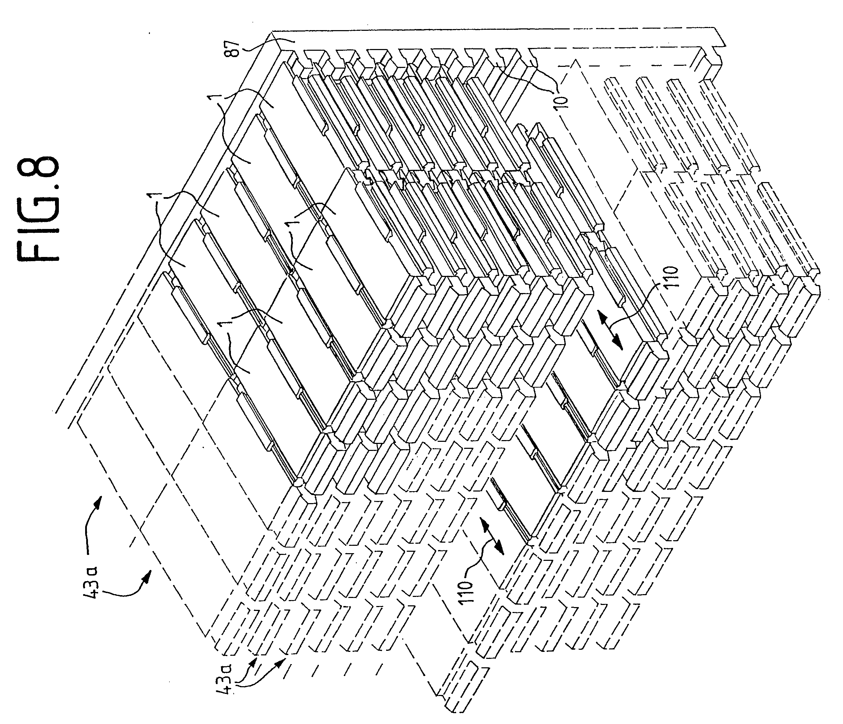

Die Leistenelemente 43a können außerdem aufeinandergesteckt werden (Fig. 8). Bei dieser Schichtbauweise werden die Leistenelemente 43a an den Ober- und Unterseiten 3,4 miteinander verrastet, gemäß Fig. 5.

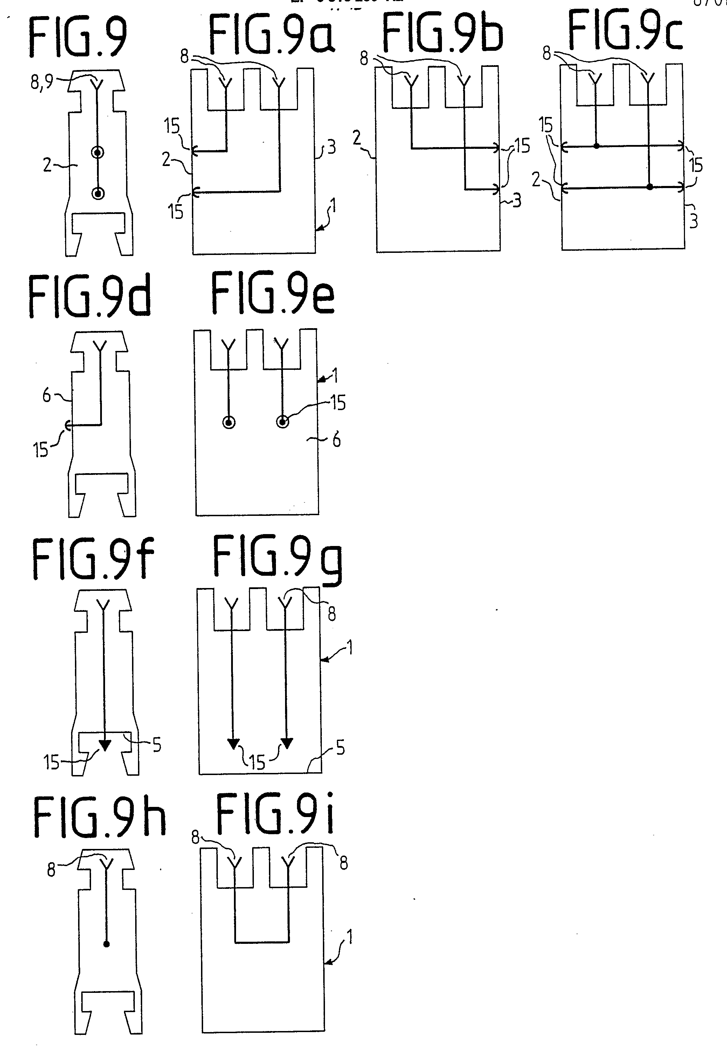

Um verschiedene Funktionen der Anschlußleisten 43 zu erhalten, sind die Teilleisten 1 mit unterschiedlichen Anschlußkontakten 9 bestückt. In den Figuren 9 - 9i sind verschiedene Schaltmöglichkeiten nach allen drei Raumachsen schematisch dargestellt, die sich durch die Anordnung der Verbindungskontakte 15 ergeben. Die Figuren 9 - 9c zeigen, wie die Schneid-Klemmkontakte 8 mit den Verbindungskontakten 15 an den Seitenflächen 2, 3 zusammengeschaltet sind. So sind die Verbindungskontakte 15 in den Fig. 9 und 9a an der linken Seitenfläche 2, in Fig. 9b an der rechten Seitenfläche 3 und in Fig. 9c an beiden Seitenflächen 2 und 3 angeordnet. In den Figuren 9d und 9e besteht eine elektrische Verbindung der Schneid-Klemmkontakte 8 zur Vorderseite 6 und in den Figuren 9f und 9g zur Unterseite 5. Wie es die Figuren 9h und 9i zeigen, können aber beide Schneid-Klemmkontakte 8 auch innerhalb der Teilleiste 1 verbunden sein.

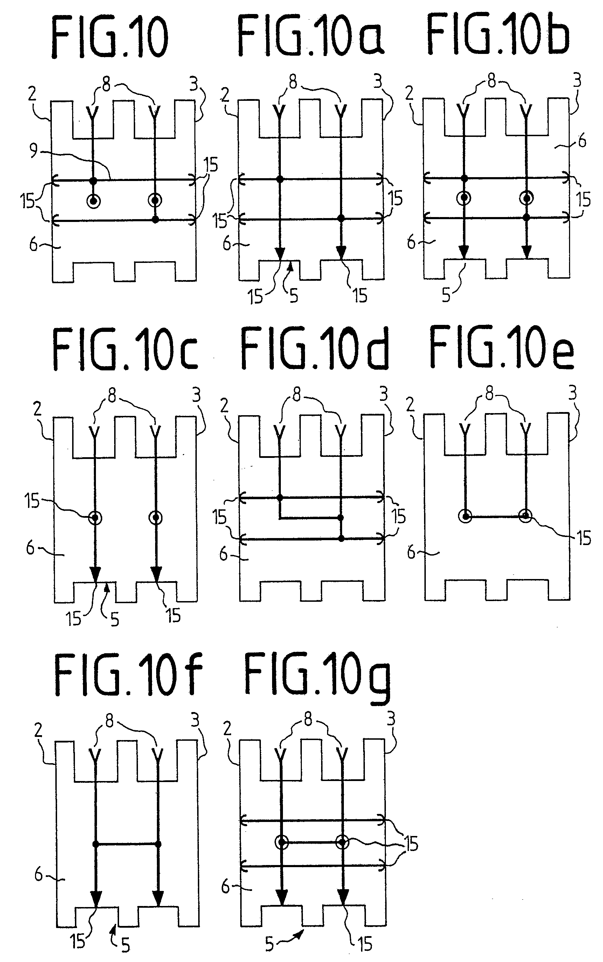

In den Figuren 10 - 10g sind Verbindungskombinationen der Schneid-Klemmkontakte 8 mit an mehreren Seitenflächen angeordneten Verbindungskontakten 15 dargestellt. So zeigt die Fig. 10, daß die Schneid-Klemmkontakte 8 mit den Verbindungskontakten 15 an der linken und rechten Schmalseite 2, 3 und an der Vorderseite 6 verbunden sind. Gemäß Fig. 10a sind die Schneid-Klemmkontakte 8 mit den Verbindungskontakten 15 an der linken und rechten Schmalseite 2, 3 und an der Unterseite 5 und gemäß Fig 10b mit den Verbindungdkontakten 15 an der linken und rechten Schmalseite 2, 3 und der Unter- und Vorderseite 5, 6 und in Fig. 10c mit den Verbindungskontakten 15 an der Vorderseite 6 und der Unterseite 5 verbunden. In den Figuren 10d bis 10g sind zwei Schneid-Klemmkontakte 8 in der Teilleiste 1 miteinander verbunden und werden zusätzlich zu den Verbindungskontakten 15 an den beiden Seitenflächen 2, 3 (Fig. 10d) zu den Verbindungskontakten 15 an der Vorderseite 6 (Fig. 10e) zu den Verbindungskontakten 15 an der Unterseite 5 (Fig. 10f) und zu den Verbindungskontakten 15 an den beiden Seitenflächen 2, 3, an der Unterseite 5 und an der Vorderseite 6 geführt.

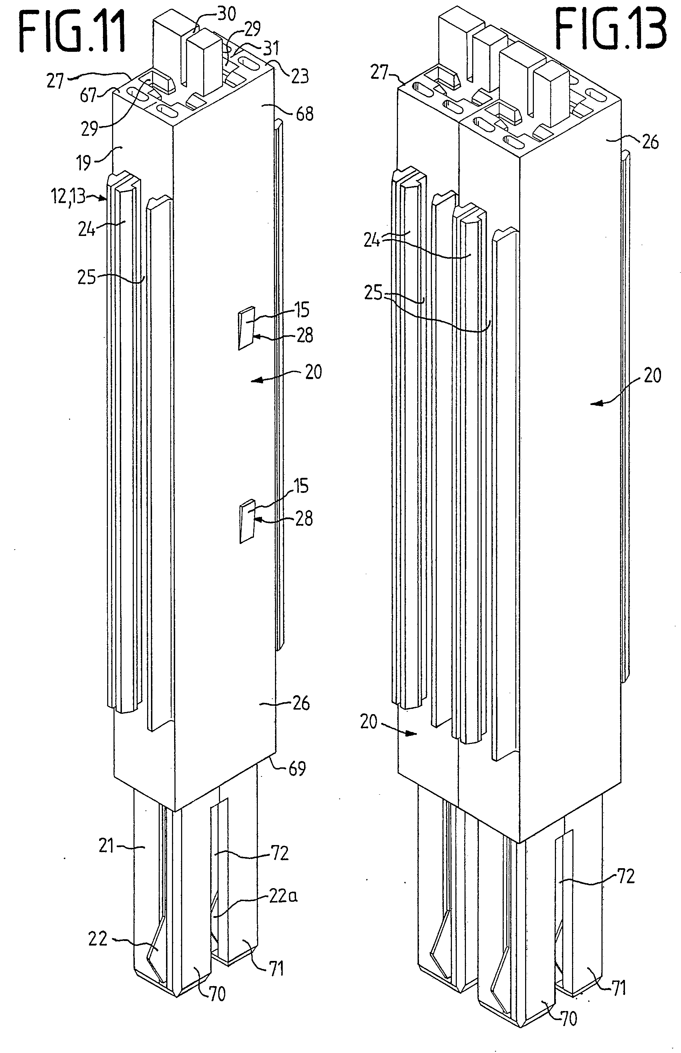

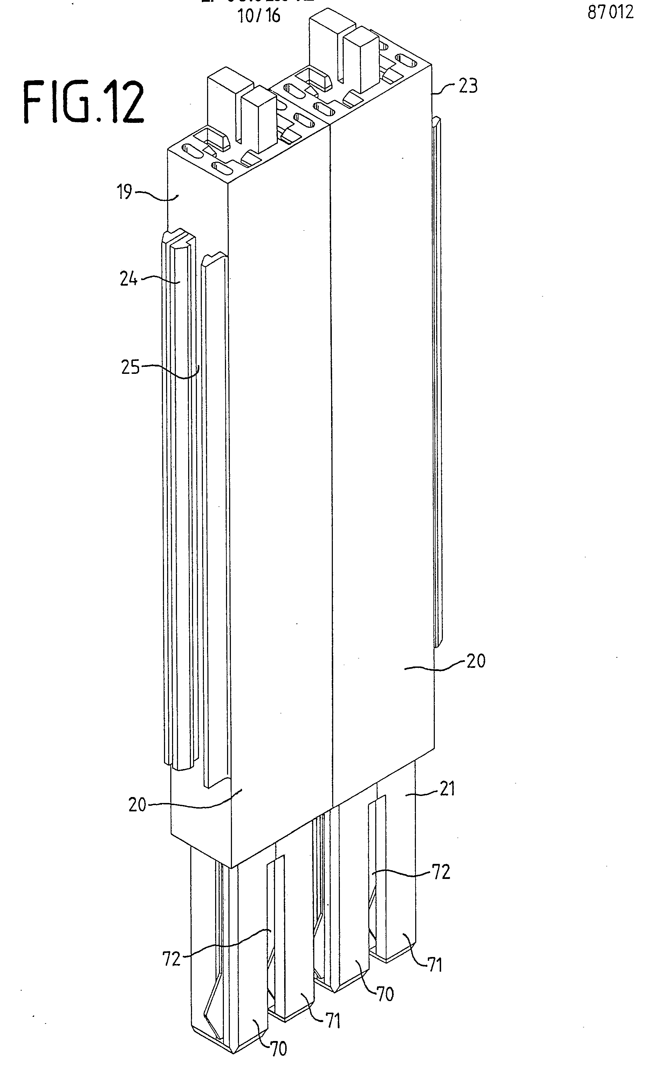

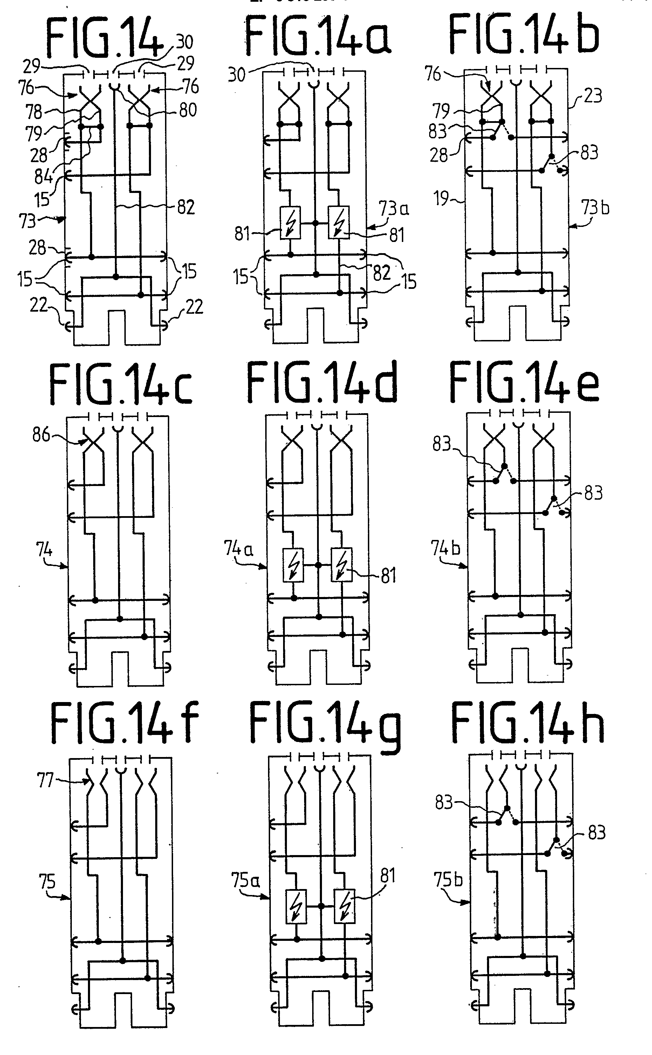

In Fig. 11 ist das Verbinderelement 20 dargestellt, das ebenfalls aus einem zweigeteilten Kunststoffkörper besteht, dessen Front- und Rückteil 67, 68 mittels Ultraschallschweißen zusammengefügt sind. Am Verbinderelement 20 sind an den Schmalseiten 19, 23 und an der Vorder- und Rückseite 26, 27 mit der Teilleiste 1 identisch ausgebildete Rastelemente 12 und Führungselemente 13 vorgesehen. Die Rast- und Führungselemente 12, 13 bestehen aus Führungsstegen 24 und Führungsnuten 25. An der Unterseite 69 weist das Verbinderelement 20 ein Steckerteil 21 auf. Das Steckerteil 21 besteht aus zwei Steckerfüßen 70 und 71, die jeweils einen Längsschlitz 72 aufweisen, der dergestalt ist, daß ein federnder bügelförmig ausgestalteter Erdkontakt 22 und Signalkontakte 22a vom Inneren des Gehäuses des Verbinderelementes 20 nach außen ragen können. Auch im Verbinderelement 20 sind an der Vorder- und Rückseite 26, 27 Öffnungen 28 vorgesehen, an die im Inneren des Verbinderelementes 20 angeordnete Verbindungskontakte 15 herangeführt werden. Hierbei sind obere und untere Öffnungen 28 für die später an den Seitenflächen angrenzenden oberen und unteren Teilleisten 1 vorgesehen. An der Gehäuseoberseite 31 des Verbinderelementes 20 sind zwei rechteckförmig ausgebildete Steckeraufnahmen 29 vorgesehen. Mittig zwischen diesen Steckeraufnahmen 29 ist ein Erdabgriff 30 vorgesehen für einen in den Figuren 14 -14h dargestellten Erdkontakt 80. Auch die Verbinderelemente 20 können aneinandergereiht werden, so daß sich verschiedene Baugruppen in beliebiger Anzahl von Verbinderelementen 20 zusammenstellen lassen. Wie es in Fig. 12 dargestellt ist, greifen bei der seitlichen Aneinanderreihung von zwei Verbinderelementen 20 die beiden keilförmig ausgebildeten Führungsstege 24 eines ersten Verbinderelementes 20 in die Führungsnut 25 des zweiten benachbarten Verbinderelementes 20 ein. Die Fig. 13 zeigt die Aneinanderreihung von zwei Verbinderelemente 20 an der Vorder- und Rückseite 26, 27. Bei dieser Aneinanderreihung greifen die an der Vorder- und Rückseite 26, 27 angeordneten, nicht dargestellten Führungsstege eines ersten Verbinderelementes 20 jeweils in die Führungsnuten eines zweiten benachbarten Verbinderelementes 20 ein.

Durch unterschiedliche Beschaltungen sind die Verbinderelemente 20 als Direktverbinder 73, als Trennverbinder 74 oder als Schaltverbinder 75 ausführbar.

In den Figuren 14, 14a und 14b ist ein Direktverbinder 73 dargestellt. Der Direktverbinder 73 verbindet zwei Schneid-Kleimmkontakte 8 der Teilleiste 1 direkt miteinander. Der Direktverbinder 73 besitzt zwei Abgreifkontakte 76 zum parallelen Abgreifen mit Prüfsteckern, die über die beiden Steckeraufnahmen 29 zugänglich sind. Die beiden Abgreifkontakte 76 bestehen aus einem Ruhekontakt, wobei beim Direktverbinder 73 beide Kontaktschenkel 78, 79 des Ruhekontaktes miteinander über eine Kontaktbrücke 84 verbunden sind. Die Kontaktschenkel 79 sind hierbei mit der oberen und unteren Öffnung 28 des Verbinderelementes 20 über die Verbindungskontakte 15 verbunden. Über den Erdabgriff 30 ist ein Erdkontakt 80 zugänglich, der über eine Erdleitung 82 mit den Erdkontakten 22 verbunden ist.

In Fig. 14a ist ein mit einem elektrischen Schutzelement 81 ausgestatteter Direktverbinder als Schutzverbinder 73a dargestellt. Das Schutzelement 81 ist zum Schutz vor Überspannungen oder Überstrom oder Übertemperatur vorgesehen. Die Schutzelemente 81 sind direkt in den Leitungsweg zwischen Abgreifkontakt 76 und den Verbindungskontakt 15 geschaltet und sind direkt mit der Ableitung 82 verbunden.

Die Fig. 14b zeigt den Direktverbinder 73 mit Umschaltkontakten 83 als Umschaltverbinder 73b. Die Umschaltkontakte 83 sind auf dem Leitungsweg zwischen dem einen Schenkel 79 des Abgreifkontaktes 76 und der oberen Öffnung 28 des Verbinderelementes angeordnet. Durch eine Umschaltung kann der Leitungsweg vom Abgreifkontakt 76 von der Öffnung 28 der linken Schmalseite 19 des Verbinderelementes 20 auf die Öffnung 28 der rechten Schmalseite 23 gelegt werden.

Die Figuren 14c bis 14e zeigen Trennverbinder 74, die zwei Anschlußkontakte der Teilleiste 1 über die Trennstelle des Trennkontaktes 86 verbinden. Die Trennstelle ermöglicht ein Trennen des Leitungsweges, das parallele oder serielle Abgreifen mit Prüfsteckern oder das Einschleifen von Schaltgliedern. Der Trennverbinder 74 besitzt im Gegensatz zum Direktverbinder 73 keine Kontaktbrücke 84. Auch der Trennverbinder 74 kann als Schutzverbinder 74a mit Schutzelementen 81 gemäß Fig. 14d oder auch als Umschaltverbinder 74 b mit Umschaltkontakten 83 gemäß Fig. 14e ausgerüstet sein.

In den Figuren 14f, 14 g und 14 h ist ein Schaltverbinder 75 dargestellt, bei dem anstelle von Abgreifkontakten und Trennkontakten 76, 86 Schaltkontakte 77 vorgesehen sind. Zum Durchverbinden des Leitungsweges ist hier ein nicht dargestelltes Zusatzelement (Brücke) notwendig. Auch der Schaltverbinder 75 kann als Schutzverbinder 75 a mit Schutzelementen 81 gemäß Fig. 14g oder auch als Umschaltverbinder 75b mit Umschaltkontakten 83 gemäß Fig. 14h ausgerüstet sein.

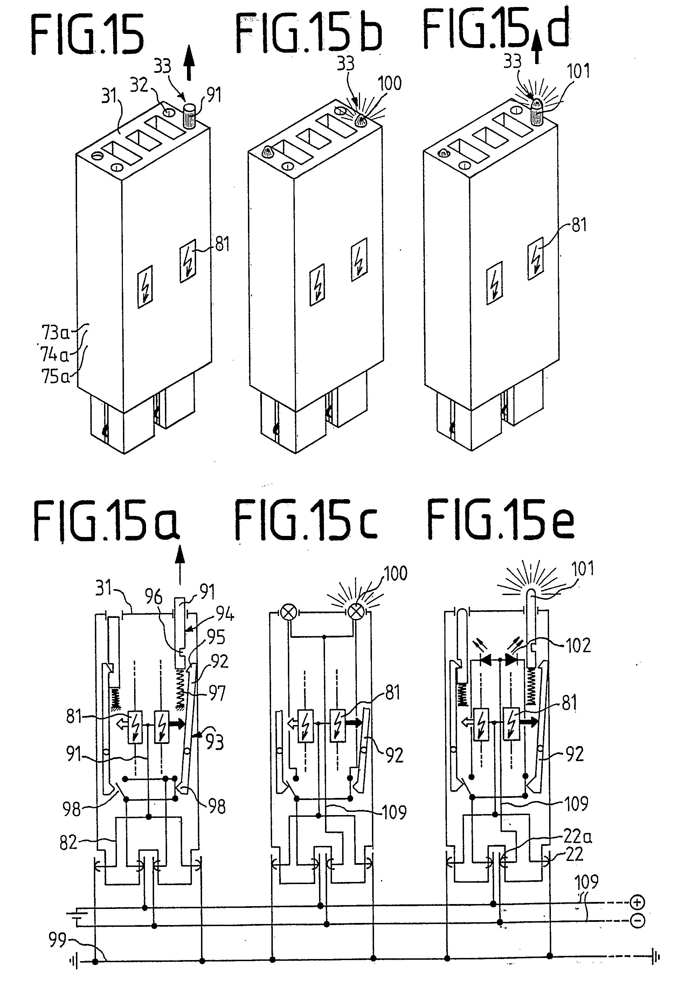

In den Figuren 15 bis 15e sind Schutzverbinder 73a, 74a, 75a gemäß den Figuren 14a, 14d und 14g dargestellt, die jeweils mit einer Signaleinrichtung 33 versehen sind.

Die Figuren 15, 15a zeigen eine mechanische Signaleinrichtung 91 mit einem Rastgesperre 93. Im elektrischen Störfall wird bei der Erwärmung des Schutzelementes 81 eine Sperrklinke 92 durch einen mechanischen Schalter betätigt, wobei ein Rasthaken 95 aus der Nut 96 eines federnd gelagerten Signalstiftes 94 ausklinkt. Der Signalstift 94 tritt somit durch die Federkraft der Druckfedern 97 aus einer Öffnung 32 der Gehäuseoberseite 31 des Schutzverbinders 93a in Pfeilrichtung A heraus und zeigt somit den Störfall an. Gleichzeitig wird durch die Sperrklinke 92 ein Schalter 98 betätigt, der die elektrische Störung auf ein Erdpotential 99 schaltet.

In den Figuren 15b, 15 c ist ein weiteres Ausführungsbeispiel einer Signaleinrichtung 91 dargestellt, die eine opto-elektrische Anzeige 100 vorsieht. Bei Erwärmung des Schutzelementes 81 wird die Anzeige 100 eingeschaltet und zeigt somit den Störfall an, auch hier wird über die Sperrklinke 92 die Überspannung auf das Erdpotential 99 geschaltet. In den Figuren 15d, 15e ist eine Kombination der ersten beiden Ausführungsformen dargestellt. Die Signaleinrichtung 91 besteht hier aus einer mechanisch und opto-elektrischen Anzeige 101. Der Signalstift 94 nach Fig. 15a besitzt hier zusätzlich eine durch das Schutzelement aktivierte Leuchtdiode 102. Die Leuchtdiode 102 ist über die Signalkontakte 22a mit der Signalleitung 109 verbunden.

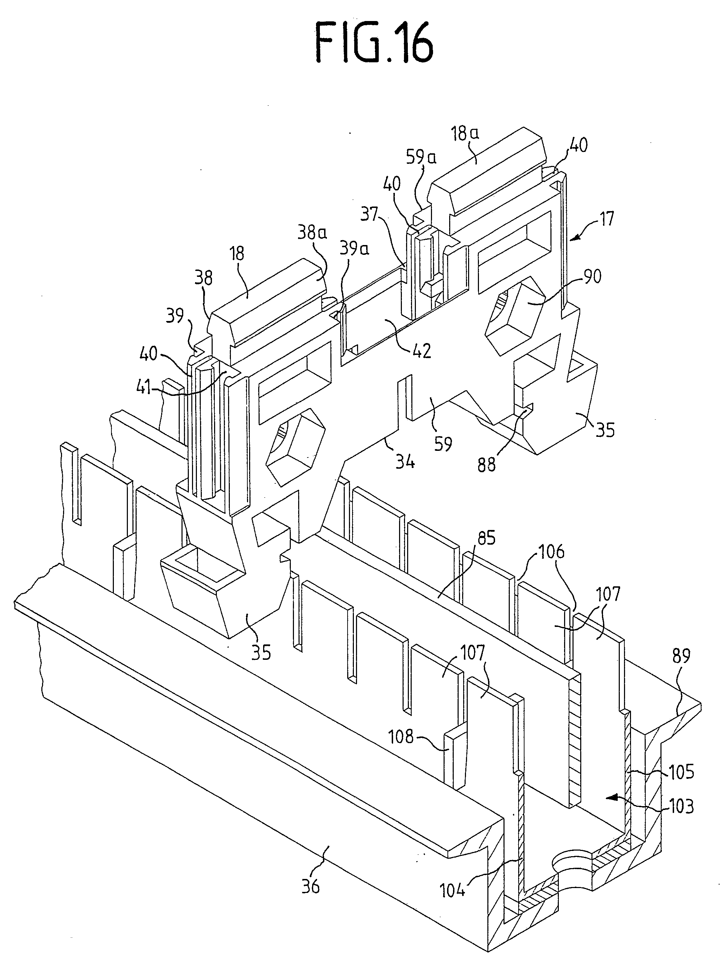

Zur Montage von Teilleisten 1 und Verbinderelementen 20 auf einer Tragschiene 36 ist ein Basiselement 17 aus Kunststoff vorgesehen (Fig. 16). An der Bodenunterseite 34 des Basiselementes 17 sind beidseitig keilförmige federnde Rastelemente 35 angeordnet. Diese besitzen jeweils eine Nut 88, in die jeweils ein Schenkel 89 der Tragschiene 36 eingreift. Des weiteren sind im Basiselement 17 zwei Öffnungen 90 zur Aufnahme von nicht dargestellten Kupplungselementen zur Aneinanderreihung mehrerer Basiselemente 17 vorgesehen. An der oberen Montageseite 37 des Basiselementes 17 sind zwei Rastsegmente bzw. Führungselemente 18, 18a mit jeweils zwei Rasthaken 38, 38a vorgesehen, die zur Vorder- und Rückseite 59, 59a des Basiselementes 17 gerichtet und identisch mit den Rasthaken 57, 58 der Teilleisten 1 ausgebildet sind. An beiden Schmalseiten 39, 39a der Rastsegmente 18, 18a sind entsprechend den Führungsstegen 11a und Führungsnuten 11 der Teilleiste 1 angepaßte Führungsstege 40 und Führungsnuten 41 ausgebildet. Zwischen den Rastsegmenten 18, 18a ist mittig im Basiselement 17 eine senkrecht verlaufende Aufnahmeöffnung 42 für das Verbinderelement 20 vorgesehen. Die Aufnahmeöffnung 42 ist rechteckförmig entsprechend der Außenkontur des Steckerteiles 21 des Verbinderelementes 20 ausgebildet.

Beim Zusammenbau einer weiteren Ausführungsform der Anschlußleiste zu der Funktionseinheit 44 gemäß Fig. 1 werden mehrere Teilleisten 1, das Verbinderelement 20 und das Basiselement 17 auf der Tragschiene 36 montiert. Beim Zusammenbau werden zuerst jeweils zwei Teilleisten 1 übereinander verrastet bzw. ineinander geschoben. Beim Verrasten hintergreifen die Rasthaken 62, 63 der Rastaufnahme 10a der oberen Teilleiste 1 die Rasthaken 57, 58 des Rastelementes 10 der unteren Teilleiste 1. Werden die beiden Teilleisten ineinandergeschoben, so wird die T-förmig gestaltete Rastsegmente 52 des Rastelementes 10 der unteren Teilleiste 1 in die T-Nut 66 der oberen Teilleiste 1 seitlich eingeschoben. An der oberen Teilleiste 1 wird eine abgehende Kabelader 122 und an die untere Teilleiste 1 eine ankommende Kabelader 123 angeschlossen. Zwei solcher übereinander verrasteter Teilleisten 1 werden beidseitig auf das Basiselement 17 aufgerastet. Hierbei rastet die Rastaufnahme 10 a mit den beidseitig angeordenten nach innen gerichteten Rasthaken 62, 63 auf das am Basiselement 17 angeordnete Rastsegment 18, 18a auf, dessen Rasthaken 38, 38a nach außen gerichtet sind. Die Teilleisten 1 sind auf das Rastsegment 18 des Basiselementes 17 aufschieb bar, da die Rastsegmente 18, 18a des Basiselementes 17 ebenfalls im Querschnitt T-förmig ausgebildet sind.

Nachdem zwei Paare von Teilleisten 1 auf dem Basiselement 17 montiert sind, wird mittig zwischen den beiden Paaren von Teilleisten 1 das Verbinderelement 20 eingeschoben. Hierbei greifen die an den Schmalseiten 19, 23 des Verbinderelementes 20 vorgesehenen Führungsstege 24 in die rechte Führungsnut 11 der links auf dem Basiselement 17 montierten Teilleiste 1 und in die linke Führungsnut 11 der rechts auf dem Basiselement 17 montierten Teilleiste 1 ein. Gleichzeitig greifen die Führungsstege 11a der Teilleiste 1 in die auf der linken und rechten Schmalseite 19, 23 vorgesehenen Führungsnuten 25 des Verbinderelementes 20 ein. Das Verbinderelement 20 wird somit beidseitig geführt und soweit eingeschoben, bis das Steckerteil 21 vollständig in der Aufnahmeöffnung 42 des Basiselementes 17 eingesteckt ist und die Unterseite 69 des Verbinderelementes 20 auf dem Basiselement 17 aufliegt.

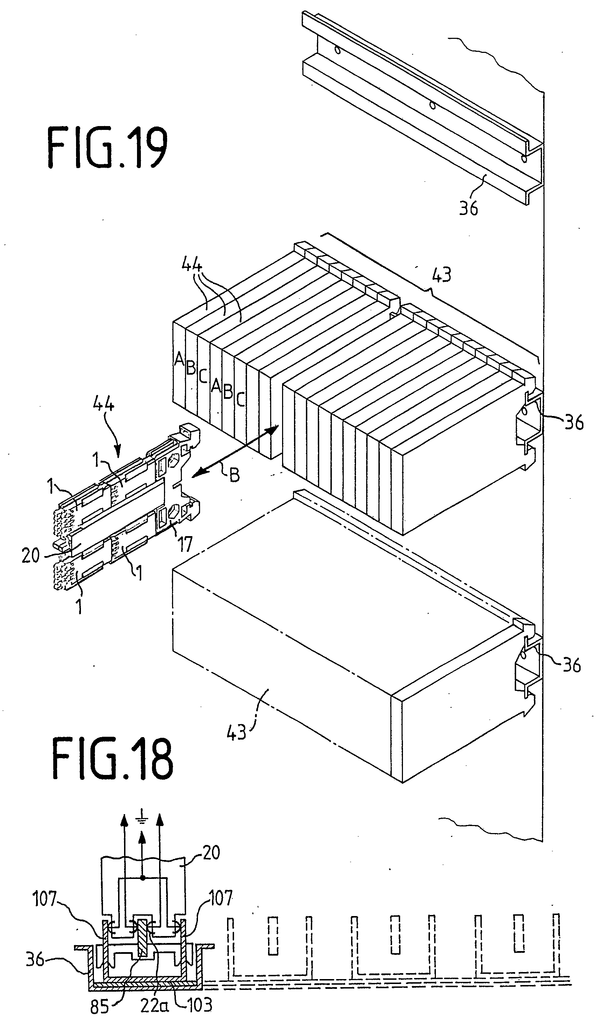

Im Steckerteil 21 des Verbinderelementes 20 sind für die Signaleinrichtungen 91 und für die Erdung in der Tragschiene 36 eine Erdschiene 103 und eine Signalschiene 85 vorgesehen, wie insbesondere die Figuren 16 und 18 zeigen. Die Erdschiene 103 besteht aus einem U-förmigen Metallblech mit zwei beidseitig angeordneten aufrecht stehenden Teilschenkeln 104, 105, die sich über die ganze Länge der Erdschiene 103 erstrecken. Diese Metallschenkel 104, 105 besitzen mehrere Schlitze 106 in einem definierten Rastermaß, so daß beidseitige Lappen 107 entstehen. Die Breite der Lappen 107 entspricht der Breite der Funktionseinheit 44.

Die Signalschiene 85 (Fig. 18) liegt mittig zwischen den Metallschenkeln 104, 105, der U-förmigen Erdschiene 103 und wird durch einen oder mehrere Halteelemente 108 (Fig. 16) fixiert, die in den Schlitzen 106 gelagert sind. Der im Steckerteil 21 vorgesehene federnde Erdkontakt 22 kommt somit mit der Innenseite des Lappens 107 der metallischen Erdschiene 103 in Kontakt, womit die Erdleitung 82 des Verbinderelementes 20 elektrisch mit der Tragschiene verbunden ist. Da die Tragschiene 36 auf einem Gestellteil montiert ist, wird somit das Erdpotential über das Gestell abgeleitet. Bei den meisten Installationen der Fernmeldetechnik wird die Erdung über die metallischen Befestigungen des Gestell-Schrankteils übernommen. In bestimmten Fällen muß das Erdpotential jedoch getrennt geführt werden. In diesem Fall wird zwischen die Tragschiene 36 und die Erdschiene 103 ein Isolierstoffstreifen gelegt und die Erdschiene 103 z.B. mit Kunststoffnieten befestigt. Das Erdpotential wird dann über eine anzuschließende Erdleitung weitergeführt.

Der im Steckerteil 21 vorgesehene andere Signalkontakt 22a des Verbinderelementes 20 kommt mit der Signalschiene 85 in Kontakt, da die Signalschiene 85 in den Längsschnitt 72 des Steckerteiles 21 eingreift. Die Signalleitung 109 für die Signaleinrichtungen 91 der Schutzverbinder 73a, 74a, 75a werden dadurch mit der Signalschiene 85 verbunden, wie es auch in den Figuren 15a, 15c und 15e schematisch dargestellt ist. Die Halteelemente 108 dienen zur Aufnahme von Leiterbahnen z.B. Leiterplattenstreifen für die Signalstromkreise. Im einfachsten Fall werden zwei Leiterbahnen für Hin- und Rückleitung der Stromversorgung von Signalleuchten (Lampe, LED) bei Lokal-und Gruppenanzeigen benötigt. Bei einer zentralen Anzeige für jedes Schutzelement werden dagegen für jedes Signalelement zwei Leiterbahnen notwendig.

Die Erdschiene 103 und die Signalschiene 85 lassen sich wie die Tragschiene 36 in der Länge durch Abteilen oder Anreihen beliebig anpassen.

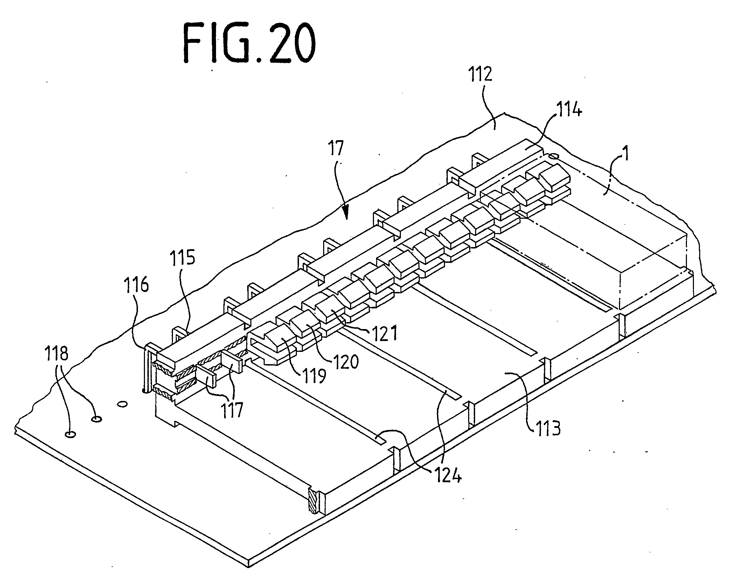

Mehrere nach Fig. 1 aufgebaute Funktionseinheiten 44 können nebeneinander auf der Tragschiene 36 zu Anschlußleisten 43 montiert werden (Fig. 19). Jede Funktionseinheit 44 hat eine individuelle Funktion A,B,C usw., die von der inneren Beschaltung gemäß der Figuren 9 bis 9i und den Figuren 10 bis 10g der Teilleisten 1 und des Verbinderelementes 20 gemäß den Figuren 14 bis 14a abhängig ist. So können Anschlußleisten 43 zusammengestellt werden, die aus mehreren Funktionseinheiten 44 unterschiedlicher Funktionen bestehen. Einzelne Funktionseinheiten 44 können aus der Anschlußleiste 43 entfernt werden und durch eine andere Funktionseinheit 44 mit einer anderen Funktion ersetzt werden, wie es der Fall B andeutet.

Zur Führung der an die Funktionseinheit 44 herangeführten Kabeladern 122, 123 ist ein Drahtführungselement 125 vorgesehen. Dieses Drahtführungselement 125 wird direkt an der Teilleiste 1 festgerastet (Fig. 1). Das Drahtführungselement 125 besitzt an den Seitenflächen 126 identisch mit den Führungsstegen 11a und Führungsnuten 11 der Teilleiste 1 ausgebildete Führungsstege 127 und Führungsnuten 128. Das Drahtführungselement 125 ist daher seitlich auf die Schmalseiten 2, 3 der Teilleiste 1 aufrastbar. Ferner sind im Drahtführungselement 125 an der Unterseite 129 beidseitig zwei Rastsegmente 130 mit zwei nach innen gerichteten Rasthaken 131, 132 vorgesehen, die im Querschnitt T-förmig ausgebildet sind. Das Drahtführungselement 125 kann somit für Längs- oder Quermontagen verwendet werden. Das Drahtführungselement 125 besitzt desweiteren zwei federnde Haken 133, 134, die zueinander gerichtet sind und zwischen denen die Kabeladern 122, 123 von oben angelegt werden.

Besteht die Notwendigkeit, Teilleisten 1 auf Leiterplatten 112 anzuordnen, so wird eine in der Figur 20 dargestellte Grundplatte 113 verwendet, die auf die Leiterplatte 112 aufgesetzt ist. Die Grundplatte 113 besteht aus Kunststoff und besitzt an der einen Seite eine aufrecht stehende Seitenwand 114. In dieser Seitenwand 114 sind Verbindungselemente 115 eingesteckt, die auf der einen Seite Lötstifte 116 und auf der anderen Seite Steckkontakte 117 aufweisen. Die Lötstifte 116 werden auf der Rückseite der Seitenwand 114 durch eine Bohrung 118 zur anderen Leiterplattenseite durchgeführt, so daß dort Kabeladern angelötet werden können. Auf der Vorderseite der Seitenwand 114 sind jeweils drei Rastsegmente 119, 120, 121 angeordnet, die entsprechend der Rastsegmente 52 der Teilleiste 1 ausgebildet sind. Zwischen zwei Rastsegmenten 118, 120 bzw. 120, 121 befinden sich die Steckkontakte 117. Die Teilleiste 1 wird auf diese Rastsegmente aufgesteckt, wobei die Rastsegmente 119, 120, 121 in die Rastaufnahme 10a der Teilleiste 1 eingreifen. Die Steckkontakte 117 greifen jetzt in die an der Unterseite 5 angeordneten Öffnungen 16 ein und stellen somit eine elektrische Verbindung zwischen den Schneid-Klemmkontakten 8 der Anschlußkontakte 9 und den an den Lötstiften 116 angeschlossenen Leiterbahnen her. In der Grundplatte 113 sind im Abstand von jeweils drei Rastsegmenten 119, 120, 121 bzw. und zwei Steckkontakten 117 Nuten 124 vorgesehen, so daß die Grundplatte 113 der gewünschten Polzahl entsprechend anpaßbar ist, durch Abbrechen der nicht benötigten Segmente.

## Bezugszeichenliste

1 Teilleiste
2 linke Seitenfläche
3 rechte Seitenfläche
4 Oberseite
5 Unterseite
6 Vorderseite
7 Rückseite
8 Schneid-Klemmkontakt
9 Anschlußkontakt
10 Rastelement
10a Rastaufnahme
11 Führungsnut
11a Führungssteg
12 Rastelement
13 Führungselement
14 Haltenoppen
15 Verbindungskontakte
16 Öffnung
17 Basiselement
18 Rastsegment
18a Führungselement
19 linke Schmalseite
20 Verbinderelement
21 Steckerteil
22 Erdkontakt
22a Signalkontakt
23 rechte Schmalseite
24 Führungssteg
25 Führungsnut
26, 27 Vorder-, Rückseite
28 Öffnungen
29 Steckeraufnahmen
30 Erdabgriff
31 Gehäuseoberseite
32 Öffnungen
33 Signaleinrichtungen
34 Bodenunterseite
35 Rastelemente
36 Tragschiene
37 Montageseite
38, 38a Rasthaken
39, 39a Schmalseiten
40 Führungssteg
41 Führungsnuten
42 Aufnahmeöffnung
43 Anschlußleiste
43a Leistenelement
44 Funktionseinheit
45, 46 Front-, Rückteil
47, 47a Schenkel
48 Klemmschlitz
49 Kabelisolierung
50, 51 Rasthaken
52 Rastsegment
53, 54 Führungselemente
56 Aufnahmenuten
57, 58 Rasthaken
59, 59 Vorder- Rückseite
60, 61 Schlitze
62, 63 Rasthaken
64 Klemmkontakt

65 Klemmnasen
66 T-Nut
67, 68 Front-, Rückteil
69 Unterseite
70, 71 Steckerfüße
72 Längsschlitz
73, 73a, 73b Direktverbinder
74, 74a, 74b Trennverbinder
75, 75a, 75b Schaltverbinder
76 Abgreifkontakt
77 Schaltkontakt
78, 79 Schenkel
80 Erdkontakte
81 elektrisches Schutzelement
82 Erdleitung
83 Umschaltkontakt
84 Kontaktbrücke
85 Signalschiene
86 Trennkontakt
87 Tragplatte
88 Nut
89 Schenkel
90 Öffnungen
91 mechanische Signaleinrichtung
92 Sperrklinke
93 Rastgesperre
94 Signalstift
95 Rasthaken
96 Nut
97 Druckfeder
98 Schalter
99 Erdpotential
100 optisch-elektrische Anzeige
101 mechanisch-optische Anzeige
102 Leuchtdiode
103 Erdschiene
104, 105 Metallschenkel
106 Schlitze
107 Lappen
108 Halteelement
109 Signalleitung
110 Pfeile
111 Geräteeinheit
112 Leiterplatte
113 Grundplatte
114 Seitenwand
115 Verbindungselement
116 Lötstiften
117 Steckkontakte
118 Bohrungen
119, 120, 121 Rastsegmente
122 abgehende Kabelader
123 ankommende Kabelader
124 Nut
125 Drahtführungselement
126 Seitenflächen
127 Führungssteg
128 Führungsnut
129 Unterseite
130 Rastsegment
131, 132 Rasthaken
133, 134 Haken

**Patentansprüche**

1. Anschlußleiste aus mehreren Teilleisten, mit an mindestens zwei Seitenflächen angeordneten Verbindungselementen und mit Anschlußkontakten für Kabeladern, insbesondere für Kabeladern der Fernmeldetechnik,
**dadurch gekennzeichnet,**
daß die Verbindungselemente (10 bis 13) als Rastelemente (12) und/oder Führungselemente (13) zur Verbindung mehrerer Teilleisten (1) miteinander ausgebildet sind und daß im Gehäuse der Teilleisten (1) Öffnungen (16) für mit den Anschlußkontakten (9) elektrisch verbundene Verbindungs- und Klemmkontakte (15; 64) vorgesehen sind, welche die Anschlußkontakte (9) der verbundenen Teilleisten (1) untereinander elektrisch verbinden.

2. Anschlußleiste nach Anspruch 1,
**dadurch gekennzeichnet,**
daß mindestens zwei Anschlußkontakte (9) zweier Teilleisten (1) über die Verbindungs- und Klemmkontakte (15; 64) miteinander verbunden sind.

3. Anschlußleiste nach Anspruch 1,
**dadurch gekennzeichnet,**
daß die Teilleiste (1) über die Rast- und Führungselemente (12, 13) mit Rast- und Führungselementen (24, 25) eines Verbinderelementes (20) verbunden ist, das als Direktverbinder (73), Trennverbinder (74) oder Schaltverbinder (75) ausgebildet ist.

4. Anschlußleiste nach den Ansprüchen 1 und 3,
**dadurch gekennzeichnet,**
daß im Gehäuse des Verbinderelementes (2) Steckeraufnahmen (29, 30) für Steckerelemente für den Abgriff von in im Verbinderelement (20) angeordneten Abgreif-, Schalt-, Erd- und Trennkontakten (76, 77, 80, 86) und Öffnungen (28) für mit diesen Kontakten (76, 77, 80, 86) elektrisch verbundene Verbindungskontakte (15) zur Verbindung weiterer Verbindungskontakte (15) vorgesehen sind.

5. Anschlußleiste nach den Ansprüchen 1 und 3,
**dadurch gekennzeichnet,**
daß das Verbinderelement (20) einen Steckerteil (21) mit federnden Erdkontakten (22) und Signalkontakten (22a) aufweist.

6. Anschlußleiste nach den Ansprüchen 1 und 3,
**dadurch gekennzeichnet,**
daß mehrere Verbinderelemente (20) zur Aneinanderreihung über den Führungssteg (24) und die Führungsnut (25) verbunden sind.

7. Anschlußleiste nach Anspruch 1,
**dadurch gekennzeichnet,**
daß die Teilleiste(1) über das Rastelement (12) oder das Führungselement (13) mit Rastsegmenten (18) oder Führungselementen (18a) eines Basiselementes (17) verbunden ist.

8. Anschlußleiste nach den Ansprüchen 1 und 7,
**dadurch gekennzeichnet,**
daß an der Bodenunterseite (34) des Basiselementes (17) federnde Rastelemente (35) zur Befestigung des Basiselementes (17) auf einer Tragschiene (36) angeordnet sind.

Anschlußelemente nach den Ansprüchen 1 und 7,
**dadurch gekennzeichnet,**
daß im Basiselement (17) eine Aufnahmeöffnung (42) für das Verbinderelement (20) vorgesehen ist.

10. Anschlußleiste nach Anspruch 1,
**dadurch gekennzeichnet,**
daß im Basiselement (17) parallel zur Längsachse der Tragschiene (36) mehrere Öffnungen (90) zur Aufnahme von Kupplungselementen zur Aneinanderreihung mehrerer Basiselemente (17) vorgesehen sind.

11. Anschlußleiste nach Anspruch 7,
**dadurch gekennzeichnet,**
daß das Basiselement (17) aus einer Grundplatte (113) und einer Seitenwand (114) mit Rastsegmenten und Führungselementen (119, 120,121) und mit Steckkontakten (117) und Lötstiften (116) zur Befestigung auf einer Leiterplatte (112) besteht.

12. Anschlußleiste nach Anspruch 1,
**dadurch gekennzeichnet,**
daß die Teilleiste (1), das Verbinderelement (20) und das Basiselement (17) eine Funktionseinheit (44) bilden.

13. Anschlußleiste nach Anspruch 1,
**dadurch gekennzeichnet,**
daß die Anschlußkontakte (9) aus Schneid-Klemmkontakten (8) bestehen.

# FIG.1

# FIG.2

# FIG.2a

# FIG.3

Z

7

1

# FIG.5

10

4

1

10 a

10

1

10 a

5

# FIG.4

Z

14      14

1       1

122,123

49

**FIG.6**

**FIG.17**

# FIG.7

111

43a

A

B

C

43

1

1

1

110

87

110

10

# FIG.8

87 012

**FIG.9**

**FIG.9a**

**FIG.9b**

**FIG.9c**

**FIG.9d**

**FIG.9e**

**FIG.9f**

**FIG.9g**

**FIG.9h**

**FIG.9i**

# FIG.10 FIG.10a FIG.10b

# FIG.10c FIG.10d FIG.10e

# FIG.10f FIG.10g

**FIG.11**

**FIG.13**

FIG.12

87 012

FIG.14   FIG.14a   FIG.14b

FIG.14c   FIG.14d   FIG.14e

FIG.14f   FIG.14g   FIG.14h

FIG.15

FIG.15b

FIG.15d

FIG.15a

FIG.15c

FIG.15e

# FIG.16

FIG.19

FIG.18

# FIG.20